# EUROPEAN PATENT APPLICATION

(11) **EP 4 765 923 A1**
(43) Date of publication of application: **24.06.2026**
(21) Application number: 23948896.8
(22) Date of filing: 17.08.2023
(51) Int. Cl.: H04W 24/02

(54) **MEASUREMENT METHOD, TERMINAL, NETWORK DEVICE, AND STORAGE MEDIUM**

(71) Applicant: Beijing Xiaomi Mobile Software Co., Ltd., Beijing 100085 (CN)
(72) Inventor: HU, Ziquan, Beijing 100085 (CN); TAO, Xuhua, Beijing 100085 (CN)
(74) Representative: Dehns Germany Partnerschaft mbB
(86) International application number: PCT/CN2023/113623
(87) International publication number: WO 2025/035469

(57) **Abstract**

The present disclosure relates to a measurement method, a terminal, a network device, and a storage medium. The measurement method is executed by a terminal, and comprises: using a first delay parameter to perform first measurement on a first measurement object to obtain a first measurement result, wherein the first delay parameter is used for indicating a delay requirement on the measurement of the first measurement object, and the delay requirement indicated by the first delay parameter is less than a delay requirement agreed by a communication protocol. In the embodiment, a solution for measuring a measurement object is provided. The first measurement object is measured according to a delay parameter that indicates the delay requirement less than the delay requirement agreed by the communication protocol, so that the delay requirement on the measurement of the first measurement object can be effectively reduced, thus improving measurement efficiency and guaranteeing communication reliability.

## Description

### TECHNICAL FIELD

The present disclosure relates to the field of communication technology, and in particular to a measurement method, a terminal, a network devices, and a storage medium.

### BACKGROUND

With the rapid development of mobile communication technology, a terminal performs measurement on a cell newly detected and obtain measurement results. The delay for performing cell measurement by the terminal is affected by a variety of conditions.

### SUMMARY

The present disclosure solves the problem of long measurement delay requirements, and ensures that when measurement is performed on the first measurement target with a delay parameter less than a delay requirement agreed upon in the communication specification, the delay requirement for performing the measurement on the first measurement target can be effectively reduced, thereby improving measurement efficiency and ensuring communication reliability.

Embodiments of the present disclosure provide a measurement method, a terminal, a network device, and a storage medium.

According to a first aspect of the embodiments of the present disclosure, a measurement method is provided, the method including:

performing a first measurement on a first measurement target using a first delay parameter to obtain a first measurement result, where the first delay parameter is used to indicate a delay requirement for measuring the first measurement target, and the delay requirement indicated by the first delay parameter is less than a delay requirement agreed upon in a communication specification.

According to a second aspect of the embodiments of the present disclosure, a measurement method is provided, the method including:

receiving a first measurement result sent by a terminal, where the first measurement result is obtained by the terminal performing a first measurement on a first measurement target using a first delay parameter, the first delay parameter is used to indicate a delay requirement for measuring the first measurement target, and the delay requirement indicated by the first delay parameter is less than a delay requirement agreed upon in a communication specification.

According to a third aspect of the embodiments of the present disclosure, a measurement method is provided, the method including:
performing, by a terminal, a first measurement on a first measurement target using a first delay parameter to obtain a first measurement result, where the first delay parameter is used to indicate a delay requirement for measuring the first measurement target, and the delay requirement indicated by the first delay parameter is less than a delay requirement agreed upon in a communication specification; and
receiving, by a network device, the first measurement result.

According to a fourth aspect of the embodiments of the present disclosure, a terminal is provided, including:
a processing module, configured to perform a first measurement on a first measurement target using a first delay parameter to obtain a first measurement result, where the first delay parameter is used to indicate a delay requirement for measuring the first measurement target, and the delay requirement indicated by the first delay parameter is less than a delay requirement agreed upon in a communication specification.

According to a fifth aspect of the embodiments of the present disclosure, a network device is provided, including:
a transceiving module, configured to receive a first measurement result sent by a terminal, where the first measurement result is obtained by the terminal performing a first measurement on a first measurement target using a first delay parameter, the first delay parameter is used to indicate a delay requirement for measuring the first measurement target, and the delay requirement indicated by the first delay parameter is less than a delay requirement agreed upon in a communication specification.

According to a sixth aspect of the embodiments of the present disclosure, a terminal is provided, including:
one or more processors;
where the terminal is configured to perform any of the methods described in the first aspect.

According to a seventh aspect of the embodiments of the present disclosure, a network device is provided, including:
one or more processors;
where the terminal is configured to perform any of the methods described in the second aspect.

According to an eighth aspect of the embodiments of the present disclosure, a communication system is provided, including:
a terminal and a network device, where the terminal is configured to implement the measurement method described in the first aspect, and the network device is configured to implement the measurement method described in the second aspect.

According to a ninth aspect of the embodiments of the present disclosure, a storage medium is provided that stores instructions which, when executed on a communication device, cause the communication device to perform the method as described in any one of the first or second aspect.

### BRIEF DESCRIPTION OF THE DRAWINGS

The accompanying drawings explained here provide a further understanding of the embodiments of the present disclosure and form part of the present disclosure. Illustrative implementations of the embodiments of the present disclosure and the description thereof serve to explain the embodiments of the present disclosure and do not constitute an improper limitation on the embodiments of the present disclosure. In the drawings:
FIG. 1A is a schematic diagram showing an architecture of a communication system according to an embodiment of the present disclosure;
FIG. 1B is a schematic diagram showing a measurement process according to an embodiment of the present disclosure;
FIG. 2 is an interactive schematic diagram showing a measurement method according to an embodiment of the present disclosure;
FIG. 3A is a schematic flowchart showing a measurement method according to an embodiment of the present disclosure;
FIG. 3B is a schematic flowchart showing a measurement method according to an embodiment of the present disclosure;
FIG. 4A is a schematic flowchart showing a measurement method according to an embodiment of the present disclosure;
FIG. 4B is a schematic flowchart showing a measurement method according to an embodiment of the present disclosure;
FIG. 5 is a schematic flowchart showing a measurement method according to an embodiment of the present disclosure;
FIG. 6 is a schematic flowchart showing a measurement method according to an embodiment of the present disclosure;
FIG. 7A is a schematic structural diagram of a terminal proposed in an embodiment of the present disclosure;
FIG. 7B is a schematic structural diagram of a network device proposed in an embodiment of the present disclosure;
FIG. 8A is a schematic structural diagram of a communication device proposed in an embodiment of the present disclosure; and
FIG. 8B is a schematic structural diagram of a chip structure proposed in an embodiment of the present disclosure.

### DETAILED DESCRIPTION

The present disclosure provides a measurement method, a terminal, and a storage medium.

In a first aspect, embodiments of the present disclosure provide a measurement method, the method including:
performing a first measurement on a first measurement target using a first delay parameter to obtain a first measurement result, where the first delay parameter is used to indicate a delay requirement for measuring the first measurement target, and the delay requirement indicated by the first delay parameter is less than a delay requirement agreed upon in a communication specification.

In the above embodiments, a method for measuring a measurement target is provided, and the first measurement target is measured with a delay parameter less than the delay requirement agreed upon in the communication specification, which can effectively reduce the delay requirement in measuring the first measurement target, thereby improving measurement efficiency and ensuring communication reliability.

In conjunction with some embodiments of the first aspect, in some embodiments, the first delay parameter includes delay parameters used in different processes of performing the first measurement on the first measurement target.

In conjunction with some embodiments of the first aspect, in some embodiments, the first delay parameter is determined based on at least one of the first number of beam sweepings and the first number of sampling points.

In the above embodiments, the first delay parameter is determined based on the first number of beam sweepings and the first number of sampling points, ensuring that the delay requirement can be reduced by adjusting at least one of the number of beam sweepings and the first number of sampling points, thereby improving measurement efficiency and ensuring communication reliability.

In conjunction with some embodiments of the first aspect, in some embodiments, the method further includes:
the first number of beam sweepings includes the number of beam sweepings used in different processes of performing the first measurement on the first measurement target; and/or, the first number of sampling points includes the number of sampling points used in different processes of performing the first measurement on the first measurement target.

In conjunction with some embodiments of the first aspect, in some embodiments, the delay requirement determined based on the number of beam sweepings in a first process and the number of sampling points used in the first process during the first measurement on the first measurement target is less than the delay requirement agreed upon in a communication specification corresponding to the first process.

In the above embodiments, it is determined that the delay requirement determined by the number of beam sweepings and the corresponding number of samplings used in the first process needs to be less than the delay requirement agreed upon in the communication specification, which ensures that the determined delay requirement is reduced, thereby improving measurement efficiency and ensuring communication reliability.

In conjunction with some embodiments of the first aspect, in some embodiments, performing the first measurement on the first measurement target using the first delay parameter to obtain the first measurement result includes:
in a case where a second measurement result satisfies a first condition, performing the first measurement on the first measurement target using the first delay parameter to obtain the first measurement result; where the second measurement result refers to a measurement result of a second measurement performed on the first cell using a second delay parameter before the first measurement is performed on the first measurement target.

In the above embodiments, in a case where it is determined that the measurement result satisfies the first condition, it is determined to perform the first measurement on the first measurement target using the first delay parameter, which ensures that the measurement result is not affected, thereby ensuring the accuracy of the measurement result obtained, and also effectively reducing the measurement delay requirement.

In conjunction with some embodiments of the first aspect, in some embodiments, the first condition corresponds to the first delay parameter.

In the above embodiments, the delay parameter is determined according to the first condition, ensuring the accuracy of the determined delay parameter, thereby reducing the delay requirement and ensuring the measurement reliability.

In conjunction with some embodiments of the first aspect, in some embodiments, the first delay parameter is determined based on the first number of the sampling points, and the first condition corresponds to the first number of the sampling points.

In conjunction with some embodiments of the first aspect, in some embodiments, the first condition includes:
a signal-to-interference-plus-noise ratio of the measurement result obtained from the measurement performed on the first measurement target is not less than a signal-to-interference-plus-noise ratio threshold.

In conjunction with some embodiments of the first aspect, in some embodiments, performing the first measurement on the first measurement target includes at least one of the following processes:
a PSS/SSS synchronization measurement;
a measurement for SSB index acquisition; or
a neighboring cell measurement.

In conjunction with some embodiments of the first aspect, in some embodiments, the method further includes:
sending first information to a network device, where the first information is used to indicate that the terminal supports a first capability, and the first capability is to reduce the delay requirement for measuring the first measurement target.

In a second aspect, the embodiments of the present disclosure provide a measurement method, the method including:
receiving a first measurement result sent by a terminal, where the first measurement result is obtained by the terminal performing a first measurement on a first measurement target using a first delay parameter, the first delay parameter is used to indicate a delay requirement for measuring the first measurement target, and the delay requirement indicated by the first delay parameter is less than a delay requirement agreed upon in a communication specification.

In conjunction with some embodiments of the first aspect, in some embodiments, the first delay parameter includes delay parameters used in different processes of performing the first measurement on the first measurement target.

In conjunction with some embodiments of the first aspect, in some embodiments, the first delay parameter is determined based on at least one of the first number of beam sweepings and the first number of sampling points.

In conjunction with some embodiments of the first aspect, in some embodiments, the first number of beam sweepings includes the numbers of beam sweepings used in different processes of performing the first measurement on the first measurement target; and/or, the first number of sampling points includes the numbers of sampling points used in different processes of performing the first measurement on the first measurement target.

In conjunction with some embodiments of the first aspect, in some embodiments, the delay requirement determined according to the number of beam sweepings used in a first process and the number of sampling points used in the first process during the first measurement on the first measurement target is less than the delay requirement agreed upon in a communication specification corresponding to the first process.

In conjunction with some embodiments of the first aspect, in some embodiments, in a case where a second measurement result satisfies a first condition, the first measurement result is obtained by performing the first measurement on the first measurement target using the first delay parameter; where the second measurement result refers to a measurement result of a second measurement performed on the first cell using a second delay parameter before the first measurement is performed on the first measurement target.

In conjunction with some embodiments of the first aspect, in some embodiments, the first condition corresponds to the first delay parameter.

In conjunction with some embodiments of the first aspect, in some embodiments, the first delay parameter is determined based on the first number of the sampling points, and the first condition corresponds to the first number of the sampling points.

In conjunction with some embodiments of the first aspect, in some embodiments, the first condition includes:
a signal-to-interference-plus-noise ratio of the measurement result obtained from the measurement performed on the first measurement target is not less than a signal-to-interference-plus-noise ratio threshold.

In conjunction with some embodiments of the first aspect, in some embodiments, performing the first measurement on the first measurement target includes at least one of the following processes:
a PSS/SSS synchronization measurement;
a measurement for SSB index acquisition; or
a neighboring cell measurement.

In conjunction with some embodiments of the first aspect, in some embodiments, the method further includes:
receiving first information sent by a terminal, where the first information is used to indicate that the terminal supports a first capability, and the first capability is to reduce the delay requirement for measuring the first measurement target.

In a third aspect, embodiments of the present disclosure provide a measurement method, the method including:
performing, by a terminal, a first measurement on a first measurement target using a first delay parameter to obtain a first measurement result, where the first delay parameter is used to indicate a delay requirement for measuring the first measurement target, and the delay requirement indicated by the first delay parameter is less than the delay requirement agreed upon in a communication specification; and
receiving, by a network device, the first measurement result.

In a fourth aspect, embodiments of the present disclosure provide a terminal, including at least one of a transceiving module and a processing module; where the terminal is configured to perform optional implementations of the first and third aspects.

In a fifth aspect, embodiments of the present disclosure provide a network device, including at least one of a transceiving module and a processing module; where the access network device is configured to perform optional implementations of the second and third aspects.

In a sixth aspect, embodiments of the present disclosure provide a terminal, including:
one or more processors;
where the terminal is configured to perform the method described in any of the first and third aspects.

In a seventh aspect, embodiments of the present disclosure provide a network device, including:
one or more processors;
where the network device is configured to perform the method described in any of the second and third aspects.

In an eighth aspect, embodiments of the present disclosure provide a storage medium storing first information which, when running on a communication device, causes the communication device to perform the method as described in any o of the first, second, and third aspects.

In a ninth aspect, embodiments of the present disclosure provide a program product that, when executed by a communication device, causes the communication device to perform the method described in any of the first, second, and third aspects.

In a tenth aspect, embodiments of the present disclosure provide a computer program that, when running on a communication device, causes the communication device to perform the method described in any of the first, second, and third aspects.

In an eleventh aspect, embodiments of the present disclosure provide a chip or chip system. The chip or chip system includes processing circuitry configured to perform the method described in any of the first, second, and third aspects.

It can be understood that the aforementioned terminal, storage medium, program product, computer program, chip, or chip system are all used to perform the methods proposed in the embodiments of the present disclosure. Therefore, for the beneficial effects they can achieve, reference can be made to the beneficial effects in the corresponding methods, which will not be repeated here.

The present disclosure provides a measurement method, a terminal, a network device, and a storage medium. In some embodiments, the terms measurement method, information processing method and measurement method can be used interchangeably, the terms communication device, information processing device and indicating device can be used interchangeably, and the terms information processing system and communication system can be used interchangeably.

The embodiments of the present disclosure are not exhaustive, but are merely illustrative of some embodiments, and are not intended to be a specific limitation on the protection scope of the present disclosure. In the case of no contradiction, each step in a certain embodiment can be implemented as an independent embodiment, and the steps can be arbitrarily combined. For example, a solution obtained from removing some steps from a certain embodiment can also be implemented as an independent embodiment, and the order of the steps in a certain embodiment can be arbitrarily exchanged. In addition, the optional implementations in a certain embodiment can be arbitrarily combined; in addition, the embodiments can be arbitrarily combined. For example, some or all steps of different embodiments can be arbitrarily combined, and a certain embodiment can be arbitrarily combined with the optional implementations of other embodiments.

In the respective embodiments of the present disclosure, unless otherwise specified or provided for by logic, the terms and/or descriptions between the embodiments are consistent and can be referenced by each other. The technical features in different embodiments can be combined to form a new embodiment based on their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "foregoing", "this", etc., can indicate "one and only one", or indicate "one or more", "at least one", etc. For example, when articles such as "a", "an", or "the" in English are used in translation, the noun following the article can be understood as a singular expression form or a plural expression form.

In the embodiments of the present disclosure, "a plurality of" refers to two or more.

In some embodiments, the terms "at least one of", "one or more of", "a plurality of", and "multiple" can be used interchangeably.

In the embodiments of the present disclosure, descriptions such as "at least one of A or B", "A and/or B", "in one case, A, and in another case, B", or "in response to one case, A, and in response to another case, B", can include the following technical solutions depending on the situation: in some embodiments, A (executing A independently of B); in some embodiments, B (executing B independently of A); in some embodiments, selecting from A and B and executing (A and B being selectively executed); and in some embodiments, A and B (executing both A and B). The same applies when there are more branches, such as A, B, and C.

In some embodiments, descriptions such as "A or B" can include the following technical solutions depending on the situation: in some embodiments, A (executing A independently of B); in some embodiments, B (executing B independently of A); and in some embodiments, selecting from A and B and executing (A and B being selectively executed). The same applies when there are more branches such as A, B, and C.

The prefixes "first" and "second" in some embodiments of the present disclosure are merely used to distinguish between different description objects and do not constitute any restriction on the position, order, priority, quantity, or content of the description objects. For the statement of the description object, please refer to the description in the context of the claims or embodiments, and no unnecessary restriction should be constituted due to the use of the prefixes. For example, if the description object is a "field", the ordinal number before the "field" in the "first field" and the "second field" does not limit the position or order between the "fields". "First" and "second" do not limit whether the "fields" modified by them are in the same message or not, nor do they limit the order of the "first field" and the "second field". For another example, if the description object is a "level", the ordinal number before the "level" in the "first level" and the "second level" does not limit the priority between the "levels". For another example, the number of the description objects is not limited by the ordinal number and can be one or more. Taking "first device" as an example, the number of "devices" can be one or more. In addition, the objects modified by different prefixes can be the same or different. For example, if the description object is "device", the "first device" and the "second device" can be the same device or different devices, and their types can be the same or different; for another example, if the description object is "information", the "first information" and the "second information" can be the same information or different information, and their contents can be the same or different.

In some embodiments, "including A", "containing A", "for indicating A", and "carrying A" can be interpreted as directly carrying A or indirectly indicating A.

In some embodiments, the terms such as "time/frequency" and "time/frequency domain" refer to time domain and/or frequency domain.

In some embodiments, the terms such as "in response to...", "in response to determining... ", "in the case of...", "when...", "upon ..." "if...", "provided ...", etc., can be used interchangeably.

In some embodiments, the terms such as "greater than", "greater than or equal to", "not less than", "more than", "more than or equal to", "not less than", "higher than", "higher than or equal to", "not lower than", and "above" can be used interchangeably, and terms such as "smaller than", "smaller than or equal to", "not greater than", "less than", "less than or equal to", "not more than", "lower than", "lower than or equal to", "not higher than", and "below" can be used interchangeably.

In some embodiments, the apparatus and device can be interpreted as physical or virtual, and their names are not limited to the names described in the embodiments. In some cases, they can also be understood as "equipment", "device", "circuit", "network element", "node", "function", "unit", "section", "system", "network", "chip", "chip system", "entity", "subject", or the like.

In some embodiments, "network" can be interpreted as devices included in the network, such as access network devices, core network devices, etc.

In some embodiments, "access network device (AN device)" can also be referred to as "radio access network device (RAN device)", "base station (BS)", "radio base station", or "fixed station", and in some embodiments, it may also be understood as "node", "access point", "transmission point (TP)", "reception point (RP)", "transmission and/or reception point (TRP)", "panel", "antenna panel", "antenna array", "cell", "macro cell", "small cell", "femto cell", "pico cell" "sector", "cell group", "serving cell", "carrier", "component carrier", "bandwidth part (BWP)", or the like.

In some embodiments, "terminal" or "terminal device" can be referred to as "user equipment (terminal)," "user terminal," "mobile station (MS)," "mobile terminal (MT)," "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or the like.

In some embodiments, obtaining data, information, etc. can comply with the laws and regulations of the country where the obtaining is performed.

In some embodiments, data, information, etc., can be obtained with the user's consent.

Furthermore, each element, each row, or each column in the table of the embodiments of the present disclosure can be implemented as an independent embodiment, and a combination of any element, any row, or any column can also be implemented as an independent embodiment.

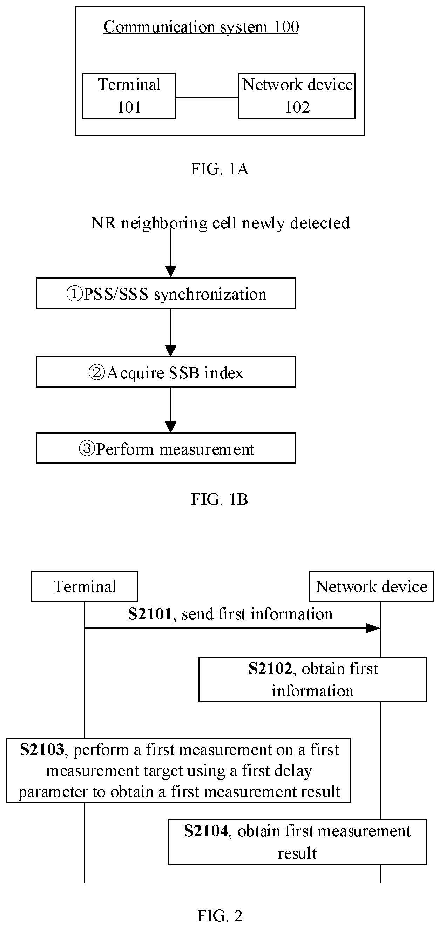

FIG. 1A is a schematic diagram of the architecture of a communication system according to an embodiment of the present disclosure. As shown in FIG. 1A, the method provided in the embodiments of the present disclosure can be applied to a communication system 100, which can include a terminal 101 and a network device 102. It should be noted that the communication system 100 can also include other devices, and the devices included in the communication system 100 are not limited in the present disclosure.

In some embodiments, the terminal 101 includes, but is not limited to, at least one of the following: a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home.

In some embodiments, the network device 102 can include at least one of an access network device and a core network device.

In some embodiments, the access network device is, for example, a node or device that accesses a terminal to a wireless network. The access network device can include, but is not limited to, at least one of the following: an evolved Node B (eNB) in a 5G communication system, a next-generation evolved Node B (ng-eNB), a next-generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open RAN, a cloud base station (cloud RAN), a base station in other communication systems, and an access node in a Wi-Fi system.

In some embodiments, the technical solutions of the present disclosure can be applicable to the Open RAN architecture. In this case, the interfaces between or within access network devices involved in the embodiments of the present disclosure can be changed into internal interfaces of the Open RAN, and the processes and information interactions between these internal interfaces can be implemented through software or programs.

In some embodiments, the access network device can be formed of a central unit (CU) and a distributed unit (DU), where the CU may also be referred to as a control unit. The CU-DU structure can be used to separate the protocol layers of the access network device, with some functions of the protocol layers being placed in and centrally controlled by the CU and some or all of the remaining functions of the protocol layers being distributed in the DU and centrally controlled by the CU, but it is not limited thereto.

In some embodiments, the core network device can be a single device including one or more network elements, or it may be multiple devices or device groups, each including all or some of the aforementioned one or more network elements. The network elements may be virtual or physical. The core network may include, for example, at least one of an Evolved Packet Core (EPC), a 5G Core Network (5GCN), or a Next Generation Core (NGC).

It can be understood that the communication system in the embodiments of the present disclosure is described for the purpose of more clearly illustrating the technical solutions of the embodiments of the present disclosure, and does not constitute a limitation on the technical solutions proposed in the embodiments of the present disclosure. As those skilled in the art will know, with the evolution of system architecture and the emergence of new business scenarios, the technical solutions proposed in the embodiments of the present disclosure are also applicable to similar technical problems.

The following embodiments of the present disclosure can be applied to the communication system 100 shown in FIG. 1A, or to some of the subjects, but are not limited thereto. The subjects shown in FIG. 1A are illustrative. The communication system may include all or some of the subjects in FIG. 1A, or it may include subjects other than those of FIG. 1A. The number and configuration of the subjects are arbitrary, the subjects may be physical or virtual, and the connection relationship between the subjects is illustrative. The subjects may not be connected or may be connected, and the connection can be in any way, which may be a direct connection or an indirect connection, a wired connection or a wireless connection.

Embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wideband (UWB), Bluetooth (a registered trademark), Public Land Mobile Network (PLMN) networks, Device-to-Device (D2D) systems, Machine-to-Machine (M2M) systems, Internet of Things (IoT) systems, Vehicle-to-Everything (V2X) systems, systems utilizing other measurement methods, next-generation systems extended based upon them, or the like. Furthermore, a combination of multiple systems (e.g., a combination of LTE or LTE-A with 5G) can be applied.

In some embodiments, in the present disclosure, measurement steps are performed when the terminal detects a new cell. Optionally, when the terminal detects a new cell, it performs three measurements. Optionally, the three measurements are a PSS/SSS synchronization measurement, a measurement for SSB index acquisition, and a neighboring cell measurement. Optionally, the newly detected cell is an NR neighboring cell.

In some embodiments, referring to FIG. 1B, the terminal performs cell measurements according to the following steps. The terminal newly detects a NR neighboring cell, performs a first step of PSS/SSS synchronization measurement to obtain a first measurement result, then performs a second step measurement for SSB index acquisition to obtain a second measurement result, and finally performs a third step measurement to obtain a third measurement result.

Optionally, if the terminal is not indicated to report the SSB measurement results based on RRM and the associated SSB index, the network device indicates the terminal to obtain the SSB index from other cells or to perform an FR2 intra-f measurement.

FIG. 2 is an interactive schematic diagram illustrating a measurement method according to an embodiment of the present disclosure. As shown in FIG. 2, the embodiments of the present disclosure relate to a measurement method, and the method includes:
**Step S2101,** a terminal sends first information.

In some embodiments, a network device receives the first information. Or, it can be understood that the network device receives the first information sent by the terminal.

In some embodiments, the terminal sends the first information to the network device.

In some embodiments, the first information is used to indicate that the terminal supports a first capability, the first capability is to reduce a delay requirement for measuring a first measurement target. In some embodiments, the first capability can also be understood as performing measurement on the first measurement target by reducing a delay parameter. In some embodiments, the first capability can also be understood as performing measurement on the first measurement target using a delay parameter that is less than a delay requirement agreed upon in a communication specification.

In some embodiments, the delay parameter is determined based on at least one of the number of beam sweepings and the number of sampling points. In some embodiments, the first information is used to indicate the maximum number of beam sweepings supported by the terminal, and/or, the first information is used to indicate the maximum number of samplings supported by the terminal in the sampling. In the embodiments of the present disclosure, indicating, through the first information, the maximum number of beam sweepings and/or the maximum number of samplings can also be considered as supporting the first capability by the terminal.

Optionally, the first information is used to indicate the maximum number of beam sweepings supported by the terminal. Or, the first information is used to indicate the maximum number of samplings supported by the terminal. Or, the first information is used to indicate the maximum number of beam sweepings supported by the terminal and the maximum number of samplings supported by the terminal.

In some embodiments, the maximum number of beam sweepings refers to the maximum number of beams that the terminal can sweep when performing beam sweeping. Or, the maximum number of beam sweepings refers to the maximum number of beams that the terminal supports in sweeping. Or, the terminal has the capability of performing the beam sweeping with the maximum number of beam sweepings.

In some embodiments, the maximum number of samplings refers to the maximum number of samples that the terminal can sample when performing sampling. Or, the maximum number of samplings refers to the maximum number of sampling points in the sampling by the terminal.

Optionally, the number of samplings refers to the number of sample points required for the terminal to obtain a measurement result.

In some embodiments, the first information is a capability indicator, which can be an enumeration-type indicator or a bit indicator. This capability indicator implicitly indicates the maximum number of beam sweepings supported by the terminal, or the maximum number of samplings supported by the terminal. For example, the terminal sends the first information, indicating that the terminal supports the number of beam sweepings agreed upon in the specification or the number of samplings agreed upon in the specification.

In some embodiments, both the number of beam sweepings and the number of samplings affect the delay when the terminal performs cell measurements. Optionally, the delay refers to the configured number of MOs (Measurement Objects) and the time required to obtain a specific MO measurement result. Optionally, the configured number of MOs is a scaling factor. Optionally, the scaling factor is a CSSF (Carrier Specific Scaling Factor) parameter. Optionally, the time required to obtain the specific MO measurement result is related to a product of the number of beam sweepings and the number of sampling points. As such, it can also be seen that delay is affected by the number of beam sweepings and the number of sampling points. In some embodiments, the smaller number of beam sweepings results in a lower delay, while a larger number of beam sweepings results in a higher delay.

Optionally, the explanation is provided by way of an example of the delay requirement where a measurement interval is not required for intra-frequency.

In some embodiments, the maximum value between a first numerical value and a second numerical value is taken as the delay requirement. Optionally, the first numerical value is 600 ms, 800 ms, or other numerical values. Optionally, the second numerical value is the product of a third numerical value, a fourth numerical value and the scaling factor. The third numerical value is a value obtained by rounding up based on the product of the delay parameter, a first parameter, a second parameter, and a third parameter. The fourth numerical value is a SMTC (SSB Measurement Timing Configuration) period. It should be noted that in this case, the DRX (Discontinuous Reception) cycle is 0.

In some embodiments, the maximum value between the first and second numerical values is taken as the delay requirement. Optionally, the first numerical value is 600 ms, 800 ms, or other numerical values. Optionally, the second numerical value is the product of the third and fourth numerical values and the scaling factor. The third value is a value obtained by rounding up based on the product of the delay parameter, the first parameter, the second parameter, and the third parameter. The fourth numerical value is the maximum value between the SMTC period and the DRX cycle. It should be noted that the DRX cycle in this case is less than 320 ms.

In some embodiments, the delay requirement is the product of a third numerical value, a fourth numerical value, and the scaling factor. The third numerical value is a value obtained by rounding up (ceiling) based on the product of the delay parameter, the first parameter, the second parameter, and the third parameter. The fourth numerical value is the DRX cycle. It should be noted that the DRX cycle in this case is greater than 320 ms.

See Table 1

**Table 1**

| **DRX cycle** | **T_{PSS/SSS_sync_intra}** |
|---|---|
| No DRX | max(600ms, ceil(M_{pss/sss_sync_w/o_gaps} x KFR X Kp x K_{layer1_measurement}) X SMTC period)^{Note 1} x CSSFᵢₙₜᵣₐ |
| DRX cycle≤ 320ms | max(600ms, ceil(1.5 x M_{pss/sss_sync_w/o_gaps} x KFR x Kp x K_{layer1_measurement}) X max(SMTC period, DRX cycle)) x CSSFᵢₙₜᵣₐ |
| DRX cycle>320ms | ceil(M _{pss/sss_sync_w/o_gaps} x K _{FR} x K ₚ x K _{layer1_measurement}) x DRX cycle x CSSF ᵢₙₜᵣₐ |
| NOTE 1: If different SMTC periodicities are configured for different cells, the SMTC period in the requirement is the one used by the cell being identified. | |
| NOTE 2: KFR is a scaling factor depending on the frequency range and the SSB SCS. For FR2-1, KFR = 1. For FR2-2: KFR = 1 if the SCS of the SSB of the cell being detected is 120 kHz, KFR = 2 if the SCS of the SSB of the cell being detected is 480 kHz, and KFR = 3 if the SCS of the SSB of the cell being detected is 960 kHz. | |

M_{pss/sss_sync_w/o_gaps} is a delay parameter. M_{pss/sss_sync_w/o_gaps}: For a UE supporting FR2-1 power class 1 or 5, M_{pss/sss_sync_w/o_gaps} =40. For a UE supporting power class 2, M_{pss/sss_sync_w/o_gaps} =24. For a UE supporting FR2-1 power class 3, M_{pss/sss_sync_w/o_gaps} =24. For a UE supporting FR2-1 power class 4, M_{pss/sss_sync_w/o_gaps} =24. For a UE supporting FR2-2 power class 1, M_{pss/sss_sync_w/o_gaps} = 60. For a UE supporting FR2-2 power class 2, M_{pss/sss_sync_w/o_gaps} = 36. For a UE supporting FR2-2 power class 3, M_{pss/sss_sync_w/o_gaps} = 36_{∘}

In some embodiments, the name of the first information is not limited, and it can be, for example, a reporting instruction, a first instruction, capability information, etc.

**Step S2102,** the network device obtains the first information.

In some embodiments, the network device receives the first information. In some embodiments, the network device receives the first information sent by the terminal. In some embodiments, the network device obtains the first information using other methods.

In some embodiments, the network device obtains the first information as specified by the protocol.

In some embodiments, the network device obtains the first information from a higher layer.

In some embodiments, the network device obtains the first information from processing.

In some embodiments, step S2102 is omitted, and the network device autonomously implements the function indicated by the first information, or the above function is a default or default setting.

**In step S2103,** the terminal performs a first measurement on a first measurement target using a first delay parameter to obtain a first measurement result.

In some embodiments, the first delay parameter is used to indicate the delay requirement for measuring the first measurement target.

In some embodiments, the delay requirement indicated by the first delay parameter is less than the delay requirement agreed upon in a communication specification.

Further, in some embodiments, the first delay parameter is less than the delay parameter agreed upon in the communication specification.

In some embodiments, the terminal performing the first measurement on the first measurement target includes different processes. Optionally, performing the first measurement on the first measurement target includes at least one of the following processes:
a PSS (Primary Synchronization Signal)/SSS (Secondary Synchronization Signal) synchronization measurement;
a measurement for SSB (Synchronization Signal/PBCH Block) index acquisition; and
a neighboring cell measurement.

In some embodiments, the first delay parameter includes delay parameters used in different processes of performing the first measurement on the first measurement target. For example, the first delay parameter includes the delay parameter for at least one process of a PSS/SSS synchronization measurement process, a SSB index acquisition measurement process, and a neighboring cell measurement process. It can also be interpreted as that the PSS/SSS synchronization measurement process corresponds to one delay parameter, the SSB index acquisition measurement process corresponds to one delay parameter, and the neighboring cell measurement process corresponds to one delay parameter.

In some embodiments, the delay parameters used in different processes of performing the first measurement on the first measurement target are the same. Alternatively, the delay parameters used in different processes of performing the first measurement on the first measurement target are different. For example, the delay parameters used in different processes of performing the first measurement on the first measurement target being different includes that the delay parameters used in at least two processes of performing the first measurement on the first measurement target are different.

In some embodiments, different power levels of the terminal correspond to different delay parameters. Alternatively, different power levels of the terminal correspond to the same delay parameter.

In some embodiments, the first delay parameter is determined based on at least one of the first number of beam sweepings and the first number of sampling points. Optionally, the first delay parameter is the product of the first number of beam sweepings and the first number of sampling points.

In some embodiments, the first number of beam sweepings includes the numbers of beam sweepings used in different processes of performing the first measurement on the first object; and/or, the first number of sampling points includes the numbers of sampling points used in different processes of performing the first measurement on the first object.

Optionally, the first number of beam sweepings includes the numbers of beam sweepings used in different processes of performing the first measurement on the first measurement target.

Optionally, the first number of sampling points includes the numbers of sampling points used in different processes of performing the first measurement on the first measurement target.

Optionally, the first number of beam sweepings includes the numbers of beam sweepings used in different processes of performing the first measurement on the first measurement target; and the first number of sampling points includes the numbers of sampling points used in different processes of performing the first measurement on the first measurement target.

In some embodiments, the delay requirement determined based on the number of beam sweepings in a first process and the number of sampling points used in the first process during the first measurement on the first measurement target is less than the delay requirement agreed upon in a communication specification corresponding to the first process.

Furthermore, the above embodiments can also be understood as follows: the product of the number of beam sweepings used in the first process and the number of sampling points used in the first process during the first measurement on the first measurement target is less than the delay parameter agreed upon in the communication specification corresponding to the first process.

In some embodiments, the terminal reduces the number of beam sweepings so that the delay requirement determined from the number of beam sweepings used in the first process and the number of sampling points used in the first process is less than the delay requirement agreed upon in the communication specification corresponding to the first process.

In some embodiments, the delay requirement determined from the number of beam sweepings in the first process and the number of sampling points used in the first process during the first measurement on the first measurement target is less than the delay requirement agreed upon in the communication specification corresponding to the first process.

In some embodiments, the product of the number of beam sweepings used in the first process and the number of sampling points used in the first process during the first measurement on the first measurement target is less than the delay parameter agreed upon in the communication specification corresponding to the first process.

For example, the terminal performs the PSS/SSS synchronization measurement according to the agreement in the communication specification, and in the subsequent SSB index acquisition (if any) and neighboring cell measurement processes, the terminal can use a specific number of beam sweepings to perform the measurement, that is, reduce the value of parameter M.

For example, the terminal performs the PSS/SSS synchronization measurement and SSB index acquisition (if any) according to the agreement in the communication specification, and in subsequent neighboring cell measurement, the terminal can use a specific number of beam sweepings to perform the measurement, that is, reduce the value of parameter M.

In some embodiments, the terminal reduces the number of beam sweepings used in the first process so that the delay requirement determined from the number of beam sweepings used in the first process and the number of sampling points used in the first process is less than the delay requirement agreed upon in the communication specification corresponding to the first process.

It should be noted that the first process is one or more of the three processes described above.

In some embodiments, in a case where a second measurement result satisfies a first condition, the first measurement is performed on the first measurement target using the first delay parameter to obtain the first measurement result; where the second measurement result refers to a measurement result of a second measurement performed on the first cell using a second delay parameter before the first measurement is performed on the first measurement target.

In some embodiments, the first condition corresponds to the first delay parameter, which can also be understood as determining the first delay parameter corresponding to the first condition based on the first condition and performing measurement on the first measurement target using the first delay parameter.

In some embodiments, the first delay parameter is determined based on the first number of sampling points, and the first condition corresponds to the first number of sampling points.

In some embodiments, the terminal performs sweeping on the first measurement target by reducing the number of sampling points.

It should be noted that the delay requirement determined from the first number of sampling points determined based on the first condition corresponding to the first process and the number of beam sweepings used in the first process during the first measurement on the first measurement target is less than the delay requirement agreed upon in a communication specification corresponding to the first process.

In some embodiments, the terminal performs sweeping on the first measurement target by reducing the number of sampling points in the first process.

It should be noted that the first conditions corresponding to different processes can be the same or different.

In the embodiments of the present disclosure, once the terminal determines the first delay parameter, it can perform measurement on the first cell based on the determined first delay parameter and obtain the first measurement result.

In some embodiments, the first delay parameter refers to a parameter sampled by the terminal when performing the cell measurements.

In some embodiments, the first delay parameter includes at least one of the number of beam sweepings and the number of sampling points.

Optionally, the first delay parameter includes the number of beam sweepings. Or, the first delay parameter includes the number of sampling points. Or, the first delay parameter includes the number of beam sweepings and the number of sampling points.

In some embodiments, the first delay parameter may be determined by the terminal itself, configured by the network device, or agreed upon in a communication specification.

In some embodiments, if the first delay parameter includes the number of beam sweepings, the number of sampling points uses a default value. Or, if the first delay parameter includes the number of sampling points, the number of beam sweepings uses a default value.

In some embodiments, the name of the first delay parameter is not limited. It may be, for example, a measurement index, a parameter index, etc.

In some embodiments, the first cell includes a neighboring cell. The neighboring cell can be a NR neighboring cell, a LTE neighboring cell, or other neighboring cells, which is not limited in the embodiments of the present disclosure.

In some embodiments, performing the cell measurement by the terminal refers to a cell measurement based on FR2 (Frequency range 2). Optionally, the frequency range of FR2 is 24 GHz to 52 GHz.

In some embodiments, the RRM measurement in the FR2 band requires the allowance of very long delays, primarily because beam-based measurements need to take beam sweeping issues into account.

In some embodiments, when the terminal performs measurement on the first cell according to the first delay parameter, there are also certain requirements for the first delay parameter.

Optionally, the number of beam sweepings is less than a first numerical value, and the first numerical value is used to indicate the maximum number of beam sweepings supported by the terminal.

Optionally, the maximum number of beam sweepings supported by the terminal can also be understood as the number of beam sweepings used by the terminal by default. If the number of beam sweepings in the first delay parameter used by the terminal is less than the maximum number of beam sweepings, it can be determined that the delay for performing the cell measurement by the terminal is reduced.

Optionally, the first numerical value can be 2, 4, 6 or other values, which is not limited in the embodiments of the present disclosure.

Optionally, the number of sampling points is less than a second numerical value, and the second numerical value indicates the maximum number of sampling points supported by the terminal.

Optionally, the maximum number of sampling points supported by the terminal can also be understood as the number of sampling points used by the terminal by default. If the number of sampling points in the first delay parameter used by the terminal is less than the maximum number of sampling points, it can be determined that the delay for performing the cell measurement by the terminal is reduced.

Optionally, the second numerical value can be 2, 3, 4, 5, 8 or other values, which is not limited in the embodiments of the present disclosure.

It should be noted that, in the embodiments of the present disclosure, the measurement on the first cell performed by the terminal includes at least one of the following:
(1) a PSS/SSS synchronization measurement.
(2) an SSB index acquisition measurement.
(3) a neighboring cell measurement.

In some embodiments, the process of performing measurement on the first cell by the terminal includes the above three processes, and the above three processes are executed sequentially from first to last, which can thus be understood as that the delay for performing the measurement on the first cell by the terminal guarantees the delays for the above three processes.

The different processes of performing measurement on the first cell all involve the number of beam sweepings and the number of sampling points, and there are also different requirements for the number of beam sweepings and the number of sampling points used for different measurement processes.

In some embodiments, the numbers of beam sweepings used in different processes of performing the measurement on the first cell by the terminal are different, or the numbers of beam sweepings used in different processes of performing the measurement on the first cell by the terminal are the same.

Optionally, the process of performing the measurement on the first cell by the terminal includes the above three processes, and the numbers of beam sweepings used in the different processes of performing the measurement on the first cell are different. For example, the numbers of beam sweepings used by the terminal in performing the two processes (1) and (2) are the same, but different from the number of beam sweepings used in process (3). For another example, the number of beam sweepings used by the terminal in performing the three processes (1), (2), and (3) are all different from each other.

Optionally, the process of performing the measurement on the first cell by the terminal includes two of the three processes mentioned above, and the numbers of beam sweepings used in the different processes of performing the measurement on the first cell are different. For example, the numbers of beam sweepings used by the terminal in performing the two processes (1) and (2) are different. For another example, the number of beam sweepings used by the terminal in performing the two processes (2) and (3) are different. For still another example, the numbers of beam sweepings used by the terminal in performing the two processes (1) and (3) are different.

Optionally, the process of performing the measurement on the first cell by the terminal includes the above three processes, and the numbers of beam sweepings used in the different processes of performing the measurement on the first cell are the same. For example, the numbers of beam sweepings used by the terminal in performing processes (1), (2), and (3) are the same.

Optionally, the process of performing the measurement on the first cell by the terminal includes two of the three processes mentioned above, and the numbers of beam sweepings used in the different processes of performing the measurement on the first cell are the same. For example, the numbers of beam sweepings used by the terminal in performing the two processes (1) and (2) are the same. For another example, the numbers of beam sweepings used by the terminal in performing the two processes (2) and (3) are the same. For still another example, the numbers of beam sweepings used by the terminal in performing the two processes (1) and (3) are the same.

In some embodiments, the numbers of beam sweepings corresponding to different processes of performing the measurement on the first cell by the terminals with different power levels are different. Or, the number of beam sweepings corresponding to different processes of performing the measurement on the first cell by the terminals with different maximum transmit powers are different.

In some embodiments, the numbers of beam sweepings for performing the measurement on the first cell by the terminals with different power levels are different. Or, the numbers of beam sweepings for performing the measurement on the first cell by the terminals with different maximum transmit powers are different.

Optionally, different power levels correspond to different maximum transmit powers supported by the terminal.

It should be noted that in the embodiments of the present disclosure, the illustration is provided by way of example where the numbers of beam sweepings corresponding to different processes of performing the measurement on the first cell by the terminals with different power levels are different. In another embodiment, however, the number of beam sweepings corresponding to the different processes of performing the measurement on the first cell by the terminals with different power levels are the same.

In some embodiments, a second measurement result of a reference signal obtained from measurement by the terminal satisfies a side condition, and the first cell is measured according to the number of sampling points to obtain the first measurement result.

Optionally, the side condition refers to a condition under which the terminal determines the number of sampling points. Furthermore, the name of the side condition is not limited in the embodiments of the present disclosure, which may be, for example, a sampling condition, a determination condition, etc.

Optionally, the second measurement result precedes the first measurement result, which can also be understood as after the terminal performs measurement on the first cell and obtains the second measurement result, the terminal then performs measurement on the first cell and obtains the first measurement result.

In some embodiments, the first measurement result is the same as the second measurement result. That is, the terminal performs the measurement using the number of sampling points and obtains the measurement result, and in the case where the measurement result satisfies the side condition, the measurement result is determined to be valid (i.e., the first measurement result).

In some embodiments, the side condition refers to that a signal-to-interference-plus-noise ratio of the reference signal is not less than a signal-to-interference-plus-noise ratio threshold. Optionally, the signal-to-interference-plus-noise ratio threshold is set by the network device, agreed upon by a communication specification, or determined by other means, which is not limited in the embodiments of the present disclosure.

For example, the signal-to-interference-plus-noise ratio threshold is -6 dB, -4 dB, or other values.

In some embodiments, if the second measurement result of the reference signal satisfies the side condition, the first cell is measured according to the number of sampling points corresponding to the side conditions to obtain the first measurement result.

Optionally, the side condition has correspondence with the number of sampling points. If the terminal determines that the second measurement result of the reference signal satisfies the side condition, it obtains the number of sampling points corresponding to the side conditions and then measures the first cell according to the number of sampling points.

In some embodiments, different processes of performing the measurement on the first cell correspond to different side conditions.

Optionally, the process of performing the measurement on the first cell by the terminal includes the above three processes, and different processes of performing the measurement on the first cell correspond to different side conditions. For example, the side conditions used by the terminal in performing the two processes (1) and (2) are the same, but are different from the side condition used in process (3). For another example, the side conditions used by the terminal in performing the three processes (1), (2), and (3) are all different from each other.

Optionally, the process of performing the measurement on the first cell by the terminal includes two of the three processes mentioned above, and different processes of performing the measurement on the first cell correspond to different side conditions. For example, the side conditions used by the terminal in performing the two processes (1) and (2) are different. For another example, the side conditions used by the terminal in performing the two processes (2) and (3) are different. For another example, the side conditions used by the terminal in performing the two processes (1) and (3) are different.

In some embodiments, different processes of performing the measurement on the first cell correspond to the same side condition.

Optionally, the process of performing the measurement on the first cell by the terminal includes the above three processes, and different processes of performing the measurement on the first cell correspond to the same side condition. For example, the side conditions used by the terminal in performing the three processes (1), (2), and (3) are all the same.

Optionally, the process of performing the measurement on the first cell by the terminal includes two of the three processes mentioned above, and different processes of performing the measurement on the first cell correspond to the same side condition. For example, the side conditions used by the terminal in performing the two processes (1) and (2) are the same. For another example, the side conditions used by the terminal in performing the two processes (2) and (3) are the same. For yet another example, the side conditions used by the terminal in performing the two processes (1) and (3) are the same.

In some embodiments, different side conditions correspond to different numbers of sampling points, or different side conditions correspond to the same number of sampling points.

**Step S2104,** the network device acquires the first measurement result.

In some embodiments, the network device receives the first measurement result. In some embodiments, the network device receives the measurement result sent by the terminal.

In some embodiments, the network device determines the delay for performing the measurement on the first cell by the terminal and receives the first measurement result according to the determined delay.

In some embodiments, the names of information, etc., are not limited to the names described in the embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" can be used interchangeably.

In some embodiments, the terms "up", "uplink", and "physical uplink" can be used interchangeably, the terms "down", "downlink", and "physical downlink" can be used interchangeably, and the terms "side", " side ink", "side communication", "sidelink communication", "direct", " direct link", "direct communication", and "direct link communication" can be used interchangeably.

In some embodiments, "acquisition", "obtaining", "getting", "receiving", "transmitting", "bidirectional transmission", and "sending and/or receiving" can be used interchangeably and can be interpreted as receiving from other entities, obtaining from protocols, obtaining from higher layers, obtaining through self-processing, or autonomous implementation, among other meanings.

In some embodiments, terms such as "sending", "transmitting", "reporting", "distributing", "transmission", "bidirectional transmission", "sending and/or receiving" can be used interchangeably.

In some embodiments, terms such as the terms such as "timing", "time point", "time", and "temporal position" can be used interchangeably, and the terms such as "duration", time period", "time window", "window", and "time" can be used interchangeably.

In some embodiments, terms such as "certain", "preseted", "preset", "set", "indicated", "a certain", "any", and "first" can be used interchangeably, and "certain A", "preseted A", "preset A", "set A", "indicated A", "a certain A", "any A", and "first A" can be interpreted as the A pre-defined in a protocol or the like, or the A obtained through setting, configuration, or indication, or a specific A, a certain A, any A, or first A, but are not limited thereto.

The measurement method involved in the embodiments of the present disclosure can include at least one of steps S2101 to S2104. For example, step S2101 may be implemented as an independent embodiment, step S2102 may be implemented as an independent embodiment, step S2103 may be implemented as an independent embodiment, step S2104 may be implemented as an independent embodiment, steps S2101 and S2102 may be implemented as an independent embodiment, steps S2103 and S2104 may be implemented as an independent embodiment, steps S2101 and S2103 may be implemented as an independent embodiment, and steps S2102 and S2104 may be implemented as an independent embodiment, but it is not limited thereto.

In some embodiments, steps S2103 and S2104 are optional, and one or more of these steps may be omitted or substituted in different embodiments.

In some embodiments, steps S2101 and S2102 are optional, and one or more of these steps may be omitted or substituted in different embodiments.

In some embodiments, steps S2102 and S2104 are optional, and one or more of these steps may be omitted or substituted in different embodiments.

In some embodiments, steps S2101 and S2103 are optional, and one or more of these steps may be omitted or substituted in different embodiments.

In some embodiments, reference can be made to other optional implementations described before or after the description corresponding to FIG. 2.

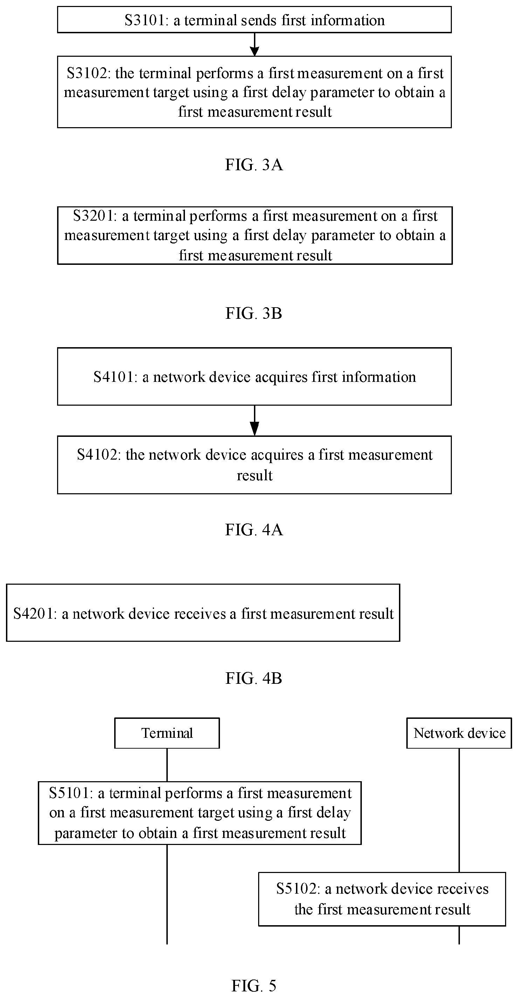

FIG. 3A is a schematic flowchart illustrating a measurement method according to an embodiment of the present disclosure, which is applied to a terminal. As shown in FIG. 3A, the embodiment of the present disclosure relates to a measurement method, and the method includes:
**Step S3101,** the terminal sends first information.

For the optional implementations of step S3101, reference can be made to the optional implementations of step S2101 in FIG. 2 and other related parts in the embodiments involved in FIG. 2, which will not be repeated here.

**In step S3102,** the terminal performs a first measurement on a first measurement target using a first delay parameter to obtain a first measurement result, where the first delay parameter is used to indicate a delay requirement for measuring the first measurement target, and the delay requirement indicated by the first delay parameter is less than a delay requirement agreed upon in a communication specification.

For the optional implementations of step S3102, reference can be made to the optional implementations of step S2103 in FIG. 2 and other related parts in the embodiments involved in FIG. 2, which will not be repeated here.

The measurement method involved in the embodiments of the present disclosure may include at least one of steps S3101 to S3102. For example, step S3101 may be implemented as an independent embodiment, and step S3102 may be implemented as an independent embodiment, but it is not limited thereto.

In some embodiments, step S3101 is optional, step S3102 is optional, and one or more of these steps may be omitted or substituted in different embodiments, but it is not limited thereto.

FIG. 3B is a schematic flowchart illustrating a measurement method according to an embodiment of the present disclosure, which is applied to a terminal. As shown in FIG. 3B, the embodiment of the present disclosure relates to a measurement method, and the method includes:
**Step S3201,** the terminal performs a first measurement on the first measurement target using a first delay parameter to obtain a first measurement result, where the first delay parameter is used to indicate a delay requirement for measuring the first measurement target, and the delay requirement indicated by the first delay parameter is less than a delay requirement agreed upon in a communication specification.

For the optional implementations of step S3201, reference can be made to step S2103 of FIG. 2, step S3102 of FIG. 3A, and other related parts in the embodiments involved in FIGS. 2 and 3A, which will not be repeated here.

FIG. 4A is a schematic flowchart illustrating a measurement method according to an embodiment of the present disclosure, which is applied to a network device. As shown in FIG. 4A, the embodiment of the present disclosure relates to a measurement method, and the method includes:
**Step S4101,** the network device acquires first information.

For the optional implementations of step S4101, reference can be made to step S2102 of FIG. 2 and other related parts in the embodiments involved in FIG. 2, which will not be repeated here.

**Step S4102,** the network device acquires a first measurement result.

For the optional implementations of step S4102, reference can be made to step S2104 of FIG. 2 and other related parts in the embodiments involved in FIG. 2, which will not be repeated here.

The measurement method involved in the embodiments of the present disclosure may include at least one of steps S4101 to S4102. For example, step S4101 may be implemented as an independent embodiment, and step S4102 may be implemented as an independent embodiment, but they are not limited thereto.

In some embodiments, step S4101 is optional, and one or more of these steps may be omitted or substituted in different embodiments.

In some embodiments, step S4102 is optional, and one or more of these steps may be omitted or substituted in different embodiments.

FIG. 4B is a schematic flowchart illustrating a measurement method according to an embodiment of the present disclosure, which is applied to a network device. As shown in FIG. 4B, the embodiment of the present disclosure relates to a measurement method, and the method includes:
**Step S4201,** the network device receives a first measurement result.

For the optional implementations of step S4201, reference can be made to step S2104 in FIG. 2, step S4102 in FIG. 4A, and other related parts in the embodiments involved in FIGS. 2 and 4, which will not be repeated here.

The first measurement result sent by the terminal is received, where the first measurement result is obtained by the terminal performing a first measurement on a first measurement target using a first delay parameter, the first delay parameter is used to indicate a delay requirement for measuring the first measurement target, and the delay requirement indicated by the first delay parameter is less than the delay requirement agreed upon in the communication specification.

In conjunction with some embodiments of the first aspect, in some embodiments, the first delay parameter includes delay parameters used in different processes of performing the first measurement on the first measurement target.

In conjunction with some embodiments of the first aspect, in some embodiments, the first delay parameter is determined based on at least one of the first number of beam sweepings and the first number of sampling points.

In conjunction with some embodiments of the first aspect, in some embodiments, the first number of beam sweepings includes the number of beam sweepings used in different processes of performing the first measurement on the first measurement target; and/or, the first number of sampling points includes the number of sampling points used in different processes of performing the first measurement on the first measurement target.

In conjunction with some embodiments of the first aspect, in some embodiments, the delay requirement determined based on the number of beam sweepings used in a first process and the number of sampling points used in the first process during the first measurement performed on the first measurement target is less than the delay requirement agreed upon in a communication specification corresponding to the first process.

In conjunction with some embodiments of the first aspect, in some embodiments, in a case where a second measurement result satisfies a first condition, the first measurement result is obtained by performing the first measurement on the first measurement target using the first delay parameter; where the second measurement result refers to a measurement result of a second measurement performed on the first cell using a second delay parameter before the first measurement is performed on the first measurement target.

In conjunction with some embodiments of the first aspect, in some embodiments, the first condition corresponds to the first delay parameter.

In conjunction with some embodiments of the first aspect, in some embodiments, the first delay parameter is determined based on the first number of sampling points, and the first condition corresponds to the first number of sampling points.

In conjunction with some embodiments of the first aspect, in some embodiments, the first condition includes:
a signal-to-interference-plus-noise ratio included in the measurement result obtained by performing the measurement on the first measurement target is not less than a signal-to-interference-plus-noise ratio threshold.

In conjunction with some embodiments of the first aspect, in some embodiments, performing the first measurement on the first measurement target includes at least one of the following processes:
a PSS/SSS synchronization measurement;
a SSB index acquisition measurement; and
a neighboring cell measurement.

In conjunction with some embodiments of the first aspect, in some embodiments, the method further includes:
receiving first information sent by a terminal, where the first information is used to indicate that the terminal supports a first capability, and the first capability is to reduce the delay requirement for measuring the first measurement target.

FIG. 5 is a schematic flowchart illustrating a measurement method according to an embodiment of the present disclosure. As shown in FIG. 5, the embodiment of the present disclosure relates to a measurement method, and the measurement includes:
**Step S5101,** a terminal performs a first measurement on a first measurement target using a first delay parameter to obtain a first measurement result, where the first delay parameter is used to indicate a delay requirement for measuring the first measurement target, and the delay requirement indicated by the first delay parameter is less than a delay requirement agreed upon in a communication specification.
**Step S5102,** a network device receives the first measurement result.

For the optional implementations of step S5101, reference can be made to step S2103 in FIG. 2, step S3102 in FIG. 3A, and other related parts in the embodiments involved in FIGS. 2 and 3A, which will not be repeated here.

For the optional implementations of step S5102, reference can be made to step S2104 of FIG. 2, step S4102 of FIG. 4A, and other related parts in the embodiments involved in FIGS. 2 and 4A, which will not be repeated here.

In some embodiments, the above method may include the methods in the above embodiments on the communication system side, the terminal side, the network device side, etc., which will not be repeated here.

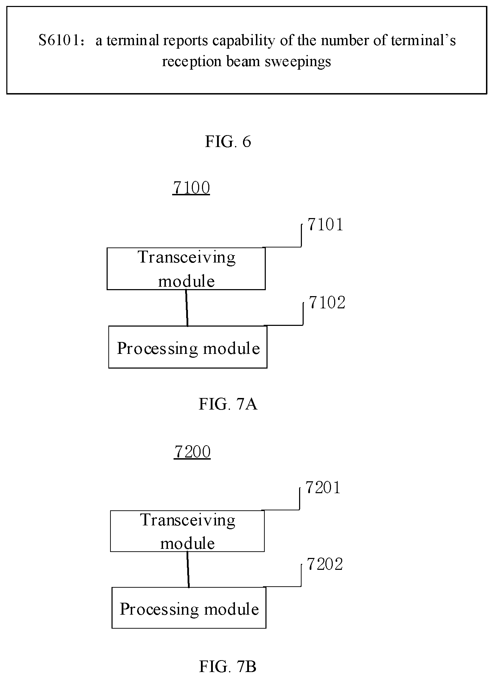

FIG. 6 is a schematic flowchart illustrating a measurement method according to an embodiment of the present disclosure. As shown in FIG. 6, the embodiment of the present disclosure relates to a measurement method, and the method includes:
**Step S6101,** a terminal reports a capability of the number of reception beam sweepings of the terminal.

In some embodiments, the UE performs a PSS/SSS synchronization measurement according to existing requirements, and in subsequent SSB index acquisition (if any) and neighboring cell measurement processes, the UE can use a specific number of beam sweepings to perform the measurements, i.e., a value of parameter M is reduced.

In some embodiments, the UE performs the PSS/SSS synchronization measurement and SSB index acquisition (if applicable) according to existing requirements, and in subsequent neighboring cell measurement, the UE can use a specific number of beam sweepings to perform the measurements, i.e., the value of parameter M is reduced.

The specific number of beam sweepings in the subsequent steps described above can be the same or different; the specific number of beam sweepings can be agreed upon by the protocol or configured by the network; different power levels may correspond to different specific numbers of beam sweepings.

In some embodiments, the UE reports a capability of the number of measurement samples of the UE.

In some embodiments, the specific condition is a side condition Ês/Iot ≥ K dB, where K ≥ -6.

In some embodiments, in performing the above processes ①②③ by the terminal, if it is determined from the measurement that a target reference signal satisfies the defined side condition, the measurement can be performed using a specific number of sampling points, that is, the value of parameter M is reduced.

In some embodiments, the correspondence between the side condition and the specific number of sampling points can be agreed upon by a protocol or configured by the network; there can be multiple side conditions corresponding to multiple specific numbers of sampling points.

In the embodiments of the present disclosure, some or all of the steps and the optional implementations thereof may be arbitrarily combined with some or all of the steps in other embodiments, or may be arbitrarily combined with the optional implementations in other embodiments.

The present disclosure also provides an apparatus for implementing any of the above methods. For example, an apparatus is provided that includes units or modules for implementing the steps performed by the terminal in any of the above methods. For another example, another apparatus is provided that includes units or modules for implementing the steps performed by a network device (e.g., an access network device, a core network functional node, a core network device, etc.) in any of the above methods.

It should be understood that the division of units or modules in the above apparatuses is only a logical functional division, and in actual implementations, they may be fully or partially integrated into a single physical entity, or they may be physically separated. Furthermore, the units or modules in the apparatus may be implemented in the form of a processor invoking software: for example, the apparatus includes a processor connected to a memory storing instructions, and the processor invokes the instructions stored in the memory to implement any of the above-mentioned methods or the functions of the various units or modules in the above-mentioned apparatus. The processor is, for example, a general-purpose processor, such as a Central Processing Unit (CPU) or a microprocessor, and the memory is a memory internal or external to the apparatus. Alternatively, the units or modules in the apparatus may be implemented in the form of hardware circuits, and the functionality of some or all of the units or modules may be realized by designing the hardware circuits, which can be understood as one or more processors. For example, in an implementation, the hardware circuit is an application-specific integrated circuit (ASIC), and the functionality of some or all of the units or modules may be realized by designing the logical relationships between the components within the circuit. For another example, in another implementation, the hardware circuit may be implemented by programmable logic devices (PLDs), such as a field-programmable gate array (FPGA), which may include a large number of logic gate circuits, and the connection relationships between the logic gate circuits are configured through configuration files, thereby achieving the functionality of some or all of the units or modules. All units or modules of the above apparatuses can be implemented entirely in the form of a processor invoking software, entirely in the form of hardware circuits, or partially by a processor invoking software with the remainder implemented by hardware circuits.

In the embodiments of the present disclosure, the processor is a circuit with signal processing capabilities. In an implementation, the processor can be a circuit with capabilities of reading and executing instructions, such as a Central Processing Unit (CPU), a microprocessor, a graphics processing unit (GPU) (which can be understood as a microprocessor), or a digital signal processor (DSP). In another implementation, the processor can implement certain functions through the logical relationships of hardware circuits, where the logical relationships of the hardware circuits are fixed or reconfigurable. For example, the processor is a hardware circuit implemented through an application-specific integrated circuit (ASIC) or programmable logic devices (PLDs), such as an FPGA. In the reconfigurable hardware circuit, the process of the processor loading a configuration file and implementing hardware circuit configuration can be understood as the process of the processor loading instructions to implement the functions of some or all of the above units or modules. Furthermore, the processor can also be a hardware circuit designed for artificial intelligence, which can be understood as an ASIC, such as a Neural Network Processing Unit (NPU), a Tensor Processing Unit (TPU), a Deep Learning Processing Unit (DPU), etc.

FIG. 7A is a schematic diagram of a structure of a terminal proposed in an embodiment of the present disclosure. As shown in FIG. 7A, the terminal 7100 can include at least one of a transceiving module 7101, a processing module 7102, etc. In some embodiments, the processing module 7102 is configured to perform measurement on a first cell according to a first delay parameter to obtain a first measurement result, where the first delay parameter includes at least one of the number of beam sweepings and the number of sampling points. Optionally, the transceiving module is configured to perform at least one of the communication steps such as sending and/or receiving steps performed by the terminal 7100 in any of the above methods (e.g., step S2101, but it is not limited thereto), which will not be described in detail here. Optionally, the processing module is configured to perform at least one of the other steps performed by the terminal 7100 in any of the above methods, which will not be described in detail here.

Optionally, the processing module 7102 is configured to perform at least one of the communication steps, such as the processing, performed by the terminal in any of the above methods, which will not be described in detail here.

FIG. 7B is a schematic diagram of a structure of a network device proposed in an embodiment of the present disclosure. As shown in FIG. 7B, the network device 7200 can include at least one of a transceiving module 7201, a processing module 7202, etc. In some embodiments, the transceiving module 7201 is configured to receive a first measurement result, where the first measurement result is obtained by a terminal performing measurement on a first cell according to a first delay parameter, and the first delay parameter includes at least one of the number of beam sweepings and the number of sampling points. Optionally, the transceiving module is configured to perform at least one of the communication steps such as sending and/or receiving performed by the network device 7200 in any of the above methods (e.g., step S2104, but it is not limited thereto), which will not be described in detail here.

Optionally, the processing module 7202 is configured to perform at least one of the communication steps, such as the processing, performed by the network device in any of the above methods, which will not be described in detail here.

In some embodiments, the transceiving module can include a transmitting module and/or a receiving module, and the transmitting module and the receiving module can be separate or integrated. Optionally, the transceiving module can be interchanged with a transceiver.

In some embodiments, the processing module can be a single module or can include multiple sub-modules. Optionally, the multiple sub-modules may each perform all or part of the steps required by the processing module. Optionally, the processing module can be interchanged with a processor.

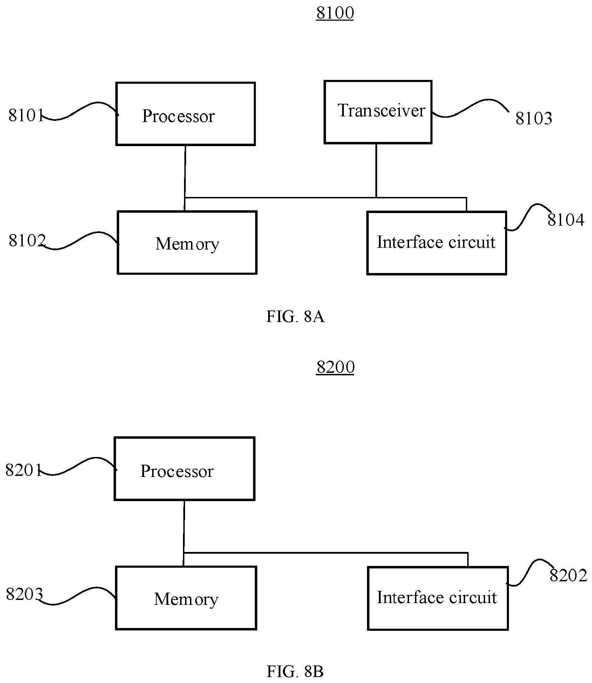

FIG. 8A is a schematic diagram of a structure of a communication device 8100 proposed in an embodiment of the present disclosure. The communication device 8100 can be a network device (e.g., access network device, core network device, etc.), or a terminal (e.g., user equipment, etc.), or can be a chip, chip system, or processor that supports the network device in implementing any of the above methods, or a chip, chip system, or processor that supports the terminal in implementing any of the above methods. The communication device 8100 can be configured to implement the methods described in the above method embodiments; for details, please refer to the descriptions in the above method embodiments.

As shown in FIG. 8A, the communication device 8100 includes one or more processors 8101. The processor 8101 can be a general-purpose processor or a dedicated processor, such as a baseband processor or a central processor. The baseband processor can be used to process communication specifications and communication data, while the central processor can be used to control communication devices (e.g., base station, baseband chip, terminal device, terminal device chip, DU, CU, or the like), execute programs, and process program data. The communication device 8100 is configured to execute any of the above methods.

In some embodiments, the communication device 8100 further includes one or more memories 8102 for storing instructions. Optionally, all or part of the memories 8102 can also be located outside the communication device 8100.

In some embodiments, the communication device 8100 further includes one or more transceivers 8103. When the communication device 8100 includes one or more transceivers 8103, the transceivers 8103 perform at least one of the communication steps such as sending and/or receiving in the above methods (e.g., steps S2101, S2102, S2103, and S2104, but it is not limited thereto).

In some embodiments, a transceiver can include a receiver and/or a transmitter, and the receiver and the transmitter can be separate or integrated. Optionally, the terms transceiver, transceiving unit, transceiving machine, transceiving circuit, etc., can be used interchangeably; the terms transmitter, transmitting unit, transmitting machine, transmitting circuit, etc., can be used interchangeably; and the terms receiver, receiving unit, receiving machine, receiving circuit, etc., can be used interchangeably.

In some embodiments, the communication device 8100 can include one or more interface circuits 8104. Optionally, the interface circuit 8104 is connected with the memory 8102, and the interface circuit 8104 can be used to receive signals from the memory 8102 or other devices, and can be used to send signals to the memory 8102 or other devices. For example, the interface circuit 8104 can read instructions stored in the memory 8102 and send the instructions to the processor 8101.

The communication device 8100 described in the above embodiments may be a network device or a terminal, but the scope of the communication device 8100 described in the embodiments of the present disclosure is not limited thereto, and the structure of the communication device 8100 may not be limited by FIG. 8A. The communication device may be a standalone device or may be part of a larger device. For example, the communication device may be: (1) an independent integrated circuit IC, or chip, or chip system or subsystem; (2) a collection of one or more ICs, optionally, the IC collection may also include a storage component for storing data and programs; (3) an ASIC, such as a modem; (4) a module that can be embedded in other devices; (5) a receiver, a terminal device, a smart terminal device, a cellular phone, a wireless device, a handheld device, a mobile unit, an in-vehicle device, a network device, a cloud device, an artificial intelligence device, etc.; and (6) others, etc.

FIG. 8B is a schematic diagram of a structure of a chip 8200 proposed in an embodiment of the present disclosure. For cases where the communication device 8100 can be a chip or a chip system, please refer to the schematic diagram of chip 8200 shown in FIG. 8B, but it is not limited thereto.

The chip 8200 includes one or more processors 8201, and chip 8200 is configured to perform any of the above methods.

In some embodiments, the chip 8200 further includes one or more interface circuits 8202. Optionally, the interface circuit 8202 is connected to a memory 8203, and the interface circuit 8202 can be used to receive signals from the memory 8203 or other devices, and the interface circuit 8202 can be used to send signals to the memory 8203 or other devices. For example, the interface circuit 8202 can read instructions stored in the memory 8203 and send the instructions to the processor 8201.

In some embodiments, the interface circuit 8202 performs at least one of the communication steps such as sending and/or receiving in the above methods, and the processor 8201 performs at least one of the other steps.

In some embodiments, the terms interface circuit, interface, transceiver pin, transceiver, etc., can be used interchangeably.

In some embodiments, the chip 8200 further includes one or more memories 8203 for storing instructions. Optionally, all or part of the memories 8203 may be located outside of the chip 8200.

The present disclosure also proposes a storage medium storing instructions that, when executed on the communication device 8100, cause the communication device 8100 to perform any of the above methods. Optionally, the storage medium is an electronic storage medium. Optionally, the storage medium is a computer-readable storage medium, but not limited thereto; it may also be a storage medium readable by other devices. Optionally, the storage medium may be a non-transitory storage medium, but not limited thereto; it may also be a transitory storage medium.

The present disclosure also provides a program product that, when executed by the communication device 8100, causes the communication device 8100 to perform any of the above methods. Optionally, the program product is a computer program product.

The present disclosure also proposes a computer program that, when running on a computer, causes the computer to perform any of the above methods.

## Claims

1. A measurement method, performed by a terminal, the method comprising:
performing a first measurement on a first measurement target using a first delay parameter to obtain a first measurement result, wherein the first delay parameter is used to indicate a delay requirement for measuring the first measurement target, and the delay requirement indicated by the first delay parameter is less than a delay requirement agreed upon in a communication specification.

2. The method according to claim 1, wherein the first delay parameter comprises delay parameters used in different processes of performing the first measurement on the first measurement target.

3. The method according to claim 1 or 2, wherein the first delay parameter is determined based on at least one of a first number of beam sweepings and a first number of sampling points.

4. The method according to claim 3, wherein,
the first number of beam sweepings comprises numbers of beam sweepings used in different processes of performing the first measurement on the first measurement target; and/or, the first number of sampling points comprises numbers of sampling points used in different processes of performing the first measurement on the first measurement target.

5. The method according to claim 4, wherein,
the delay requirement determined according to the number of beam sweepings used in a first process and the number of sampling points used in the first process in the first measurement performed on the first measurement target is less than the delay requirement agreed upon in the communication specification corresponding to the first process.

6. The method according to claim 3, wherein performing the first measurement on the first measurement target using the first delay parameter to obtain the first measurement result comprises:
in a case where a second measurement result satisfies a first condition, performing the first measurement on the first measurement target using the first delay parameter to obtain the first measurement result; wherein the second measurement result is a measurement result of a second measurement performed on the first cell using a second delay parameter before the first measurement performed on the first measurement target.

7. The method according to claim 6, wherein the first condition corresponds to the first delay parameter.

8. The method according to claim 7, wherein the first delay parameter is determined based on the first number of sampling points, and the first condition corresponds to the first number of sampling points.

9. The method according to any one of claims 6 to 8, wherein the first condition comprises:
a signal-to-interference-plus-noise ratio comprised in the measurement result obtained from the measurement performed on the first measurement target is not less than a signal-to-interference-plus-noise ratio threshold.

10. The method according to any one of claims 1 to 9, wherein the first measurement performed on the first measurement target comprises at least one of the following processes:
a measurement for primary synchronization signal (PSS)/secondary synchronization signal (SSS) synchronization;
a measurement for synchronization signal block (SSB) index acquisition; or
a measurement for a neighboring cell.

11. The method according to any one of claims 1 to 10, wherein the method further comprises:
sending first information to a network device, wherein the first information is used to indicate that the terminal supports a first capability, and the first capability is to reduce the delay requirement for measuring the first measurement target.

12. A measurement method, wherein the method comprises:
receiving a first measurement result sent by a terminal, wherein the first measurement result is obtained by the terminal performing a first measurement on a first measurement target using a first delay parameter, the first delay parameter is used to indicate a delay requirement for measuring the first measurement target, and the delay requirement indicated by the first delay parameter is less than a delay requirement agreed upon in a communication specification.

13. The method according to claim 12, wherein the first delay parameter comprises delay parameters used in different processes of performing the first measurement on the first measurement target.

14. The method according to claim 12 or 13, wherein the first delay parameter is determined based on at least one of a first number of beam sweepings and a first number of sampling points.

15. The method according to claim 14, wherein the first number of beam sweepings comprises numbers of beam sweepings used in different processes of performing the first measurement on the first measurement target; and/or, the first number of sampling points comprises numbers of sampling points used in different processes of performing the first measurement on the first measurement target.

16. The method according to claim 15, wherein the delay requirement determined according to the number of beam sweepings used in a first process and the number of sampling points used in the first process in the first measurement performed on the first measurement target is less than the delay requirement agreed upon in the communication specification corresponding to the first process.

17. The method according to claim 14, wherein in a case where a second measurement result satisfies a first condition, the first measurement result is obtained by performing the first measurement on the first measurement target using the first delay parameter; wherein the second measurement result is a measurement result of a second measurement performed on the first cell using a second delay parameter before the first measurement performed on the first measurement target.

18. The method according to claim 17, wherein the first condition corresponds to the first delay parameter.

19. The method according to claim 18, wherein the first delay parameter is determined based on the first number of sampling points, and the first condition corresponds to the first number of sampling points.

20. The method according to any one of claims 17 to 19, wherein,
the first condition comprises:
a signal-to-interference-plus-noise ratio comprised in the measurement result obtained from the measurement performed on the first measurement target is not less than a signal-to-interference-plus-noise ratio threshold.

21. The method according to any one of claims 12 to 20, wherein,
the first measurement performed on the first measurement target comprises at least one of the following processes:
a measurement for PSS/SSS synchronous;
a measurement for SSB index acquisition; or
a measurement for a neighboring cell.

22. The method according to claim 21 or 22, wherein the method further comprises:
receiving first information sent by the terminal, wherein the first information is used to indicate that the terminal supports a first capability, and the first capability is to reduce the delay requirement for measuring the first measurement target.

23. A measurement method, wherein the method comprises:
performing, by a terminal, a first measurement on a first measurement target using a first delay parameter to obtain a first measurement result, wherein the first delay parameter is used to indicate a delay requirement for measuring the first measurement target, and the delay requirement indicated by the first delay parameter is less than a delay requirement agreed upon in a communication specification; and
receiving, by a network device, the first measurement result.

24. A terminal, comprising:
a processing module, configured to perform a first measurement on a first measurement target using a first delay parameter to obtain a first measurement result, wherein the first delay parameter is used to indicate a delay requirement for measuring the first measurement target, and the delay requirement indicated by the first delay parameter is less than a delay requirement agreed upon in a communication specification.

25. A network device, comprising:
a transceiving module, configured to receive a first measurement result sent by a terminal, wherein the first measurement result is obtained by the terminal performing a first measurement on a first measurement target using a first delay parameter, the first delay parameter is used to indicate a delay requirement for measuring the first measurement target, and the delay requirement indicated by the first delay parameter is less than a delay requirement agreed upon in a communication specification.

26. A terminal, comprising:
one or more processors;
wherein the terminal is configured to perform the measurement method according to any one of claims 1 to 11.

27. A network device, comprising:
one or more processors;
wherein the network device is configured to perform the measurement method according to any one of claims 12 to 24.

28. A communication system, comprising a terminal and a network device, wherein the terminal is configured to implement the measurement method according to any one of claims 1 to 11, and the network device is configured to implement the measurement method according to any one of claims 12 to 24.

29. A storage medium storing instructions, wherein the instructions, when running on a communication device, cause the communication device to perform the measurement method according to any one of claims 1 to 11, or perform the measurement method according to any one of claims 12 to 24.
